# FASCICULE DE BREVET EUROPEEN

(11) **EP 1 803 084 B1**
(45) Date de publication et mention de la délivrance du brevet: **27.02.2013**
(21) Numéro de dépôt: 05800642.0
(22) Date de dépôt: 27.09.2005
(51) Int. Cl.: G06K 19/073

(54) **VERROUILLAGE D'UN CIRCUIT INTEGRE**
VERFAHREN ZUM BLOCKIEREN EINER INTEGRIERTEN SCHALTUNG
METHOD FOR LOCKING AN INTEGRATED CIRCUIT

(30) Priorité: 28.09.2004 FR 0452183
(43) Date de publication de la demande: 04.07.2007
(73) Titulaire: STMicroelectronics SA, F-92120 Montrouge (FR)
(72) Inventeur: WUIDART, Luc, F-83910 Pourrieres (FR); MARINET, Fabrice, F-13790 Chateauneuf Le Rouge (FR)
(74) Mandataire: de Beaumont, Michel
(86) Numéro de dépôt international: PCT/FR2005/050787
(87) Numéro de publication internationale: WO 2006/035185

(56) Documents cités:
- FR-A- 2 503 423
- FR-A- 2 738 971
- US-A- 5 191 608
- US-A1- 2002 047 049
- US-A1- 2004 168 072

## Description

### Domaine de l'invention

La présente invention concerne de façon générale les circuits intégrés et plus particulièrement la protection de la fabrication de tels circuits.

La présente invention s'applique à tout circuit intégré quel que soit l'élément ou l'appareil électronique dans lequel il est logé.

### Exposé de l'art antérieur

Pour protéger un circuit intégré, on prévoit généralement un ou plusieurs mécanismes conditionnant l'accès à des fonctions sensibles du circuit à la fourniture par l'utilisateur de clés (mots numériques) autorisées. Cette technique de protection est une technique dite aval, car ce n'est pas la fabrication proprement dite que l'on protège. En fait, ce sont les applications du circuit qui se trouvent protégées par les clés qui sont souvent introduites en mémoire non volatile par le fournisseur d'application et distribuées aux utilisateurs.

Un inconvénient des solutions connues est qu'elles n'évitent pas des fabrications pirates. En particulier, elles n'évitent pas la réalisation de circuits intégrés à partir d'une connaissance de la structure (lay-out) du circuit, permettant de reconstituer le jeu de masques de fabrication du circuit. Or, il est aujourd'hui possible par ingénierie inverse (reverse engineering) de reconstituer les différents masques ayant servis à la fabrication d'un circuit intégré. Disposant d'un jeu de masques (un masque représente un ou plusieurs circuits), un fabriquant est capable de déterminer les différentes zones de dépôts, gravures, implantation, métallisations, etc. et de définir, pour une plaquette entière comportant plusieurs circuits intégrés reproduisant le même masque, les différentes zones de dépôts, gravures, implantations, métallisations, etc. Même si un identifiant est caché dans la structure de la puce de circuit intégré, c'est généralement par les masques, de sorte que en reproduisant ces masques, le fabriquant est capable de fabriquer un lot pirate possédant un identifiant correct. Dans le cas d'introductions de clés par les fournisseurs d'application, les circuits pirates produits sont également fonctionnels.

De plus, un même sous-traitant est aujourd'hui susceptible de fabriquer des circuits pour plusieurs concepteurs, qui lui fournissent les jeux de masques appropriés. Le donneur d'ordre n'est alors pas en mesure de se protéger d'un sous-traitant indélicat utilisant son jeu de masques pour une production non autorisée.

### Résumé de l'invention

Le document FR-A-2 738 971 décrit un procédé de détermination d'une clé et prévoit la détermination d'une clé de cryptage qui est dépendante d'une matrice de contacts électriques réalisée à la fabrication du circuit, donc à l'intérieur de celui-ci.

Le document FR-A-2 503 423 décrit un système de carte à mémoire électronique pouvant être rechargée à des valeurs fiduciaires et prévoit des comparaisons de valeurs stockées dans une mémoire non volatile.

La présente invention vise à améliorer la protection des circuits intégrés contre des fabrications pirates.

L'invention vise plus particulièrement à empêcher l'utilisation de circuits intégrés qui seraient issus d'une fabrication pirate, par utilisation du schéma d'implantation du circuit (lay-out), par utilisation d'un jeu de masques, etc.

Pour atteindre ces objets ainsi que d'autres, la présente invention prévoit un procédé de protection d'un circuit intégré selon la revendication 1.

Selon un mode de mise en oeuvre de la présente invention, l'enregistrement de ladite clé dans le circuit intégré n'est autorisé par celui-ci que si l'application de ladite fonction à la clé respecte ladite valeur.

Selon un mode de mise en oeuvre de la présente invention, ladite fonction a pour opérandes au moins ladite clé et ledit premier paramètre constitué d'un numéro d'identification du circuit.

Selon un mode de mise en oeuvre de la présente invention, ladite clé est générée, à l'extérieur du circuit, à partir dudit paramètre et de la fonction pour respecter ladite valeur.

Selon un mode de mise en oeuvre de la présente invention, la fonction tient compte d'un deuxième paramètre présent de façon non volatile dans le circuit à l'issue de sa fabrication.

Selon un mode de mise en oeuvre de la présente invention, ledit deuxième paramètre dépend de la position de la puce contenant le circuit intégré dans une plaquette portant plusieurs puces.

Selon un mode de mise en oeuvre de la présente invention, ledit paramètre diffère d'une puce de circuit intégré à une autre ou d'un groupe de puces à un autre.

L'invention prévoit également un procédé de personnalisation d'un circuit intégré selon la revendication 9.

L'invention prévoit également un procédé de fabrication de puces de circuit intégré, consistant à faire varier au sein d'un même jeu de masques définissant plusieurs circuits, une fonction de calcul dépendant d'un paramètre pour la mise en oeuvre du procédé de protection.

L'invention prévoit également un circuit intégré selon la revendication 8.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, de façon schématique et sous forme de blocs, un mode de réalisation d'un module de conditionnement du démarrage d'un circuit intégré selon la présente invention ;
la figure 2 représente, de façon schématique et sous forme de blocs, un exemple d'architecture simplifiée d'un circuit intégré selon un mode de réalisation préféré de la présente invention ;
la figure 3A illustre, par un organigramme simplifié, un mode de mise en oeuvre d'une phase de génération d'une clé dans un circuit intégré selon la présente invention ; et
la figure 3B illustre par un organigramme simplifié, un mode de mise en oeuvre d'une phase d'un démarrage d'un circuit intégré protégé par le procédé de l'invention.

### Description détaillée

Par souci de clarté, seuls les étapes et éléments qui sont utiles à la compréhension de l'invention ont été représentés. En particulier, les différents constituants d'un circuit intégré protégé par l'invention qui sont liés à l'application de ce circuit (sa destination) n'ont pas été représentés, l'invention étant compatible quels que soient les éléments contenus dans le circuit intégré et quelle que soit sa destination.

Selon une caractéristique de l'invention, à chaque démarrage du circuit (par exemple à chaque mise sous tension ou à chaque réinitialisation (RESET)), un processus matériel ou logiciel conditionne ce démarrage au résultat d'un calcul mettant en oeuvre, comme opérandes, au moins un paramètre du circuit intégré fixé à sa fabrication et présent de façon non volatile dans le circuit en fin de fabrication, et au moins une clé introduite dans ce circuit après fabrication.

Qu'il s'agisse d'un identifiant ou d'un paramètre de la fonction de calcul, celui-ci est préférentiellement natif dans le circuit intégré. Le paramètre peut être obtenu par un réseau de paramètres physiques sensibles aux dispersions technologiques de fabrication du composant, être fixé par masque à la fabrication, ou être introduit par tout autre moyen à la fabrication. De préférence, cet identifiant a une certaine dispersion (diversification) d'une puce à une autre ou d'un lot de puces à un autre.

L'invention sera décrite par la suite en relation avec un mode de mise en oeuvre préféré dans lequel deux paramètres liés à la fabrication sont prévus (un numéro d'identification et un paramètre de la fonction de calcul). On notera toutefois qu'elle s'applique plus généralement dès qu'un paramètre lié à la fabrication est combiné (par un calcul logique ou arithmétique) avec une clé dont dépend ce paramètre et qui est calculée (et stockée dans le circuit) après fabrication. Le fait de subdiviser ce paramètre en plusieurs comme dans le mode de réalisation préféré revient fonctionnellement au même à partir du moment où il s'agit d'un paramètre numérique. Par exemple, en notant f_{A} la fonction de calcul de paramètre A lié à la fabrication, ID l'identifiant du circuit lié à la fabrication et KEY la clé, dire qu'un résultat R = f_{A}(ID, KEY) revient au même que dire que le résultat R = h_{(A, ID)} (KEY), avec h une fonction de calcul dépendant de A et de ID. La seule différence éventuelle provient de la source des paramètres A et ID qui peuvent, en étant séparés, avoir des origines différentes (par exemple, un réseau de paramètres physiques et une zone de mémoire morte (ROM)).

Selon une autre caractéristique de l'invention, la clé qui doit être combinée avec le paramètre natif pour autoriser ou non le fonctionnement du circuit dépend de ce paramètre. Dans le mode de réalisation préféré, la clé est choisie en fonction de l'identifiant et de la fonction de calcul combinant cet identifiant à la clé. Ainsi, à la différence de ce que l'invention appelle "paramètres" et qui correspondent à des valeurs intrinsèques à la puce (non modifiables de l'extérieur ou par l'environnement), la clé est calculée après fabrication.

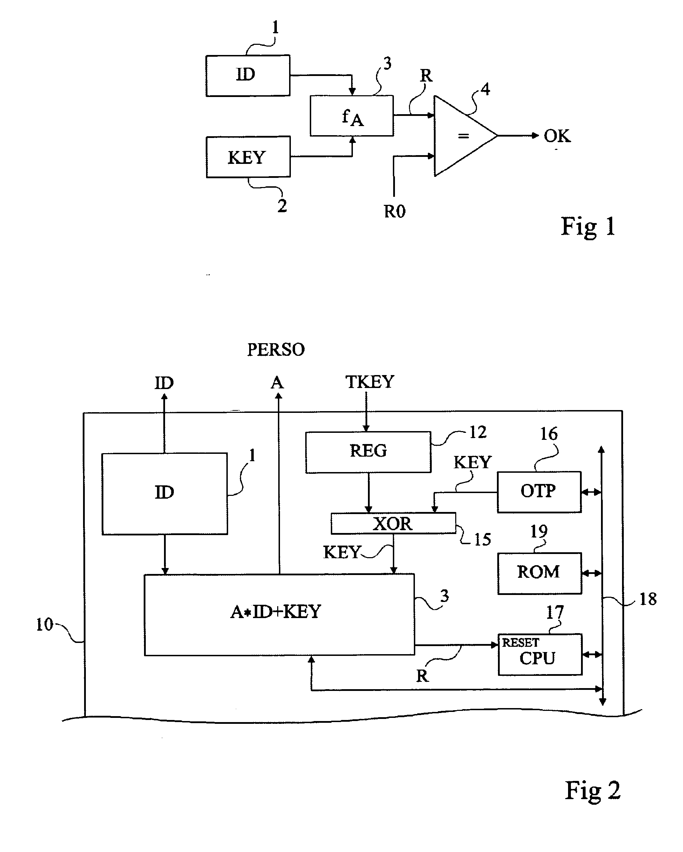

La figure 1 illustre, de façon très schématique et sous forme de blocs, un mode de mise en oeuvre du procédé de protection de l'invention. Cette figure illustre un mode de réalisation d'un circuit d'autorisation de démarrage du circuit par la mise en oeuvre de l'invention.

Dans cet exemple, un numéro d'identification de la puce de circuit intégré (bloc 1, ID) préférentiellement différent d'une puce à l'autre ou d'un groupe de puces à un autre est présent de façon intrinsèque dans le circuit intégré. Cet identifiant ID est, par exemple, mémorisé par un réseau de fusibles (cas le plus simple), extrait à chaque interrogation par lecture d'un réseau de paramètres physiques sensibles aux dispersions technologiques (pourvu que l'identifiant soit stable d'une extraction à une autre), ou obtenu par toute autre méthode de génération d'un identifiant d'une puce d'un circuit intégré. Cet identifiant qui constitue préférentiellement un nombre binaire n'est toutefois pas introduit depuis l'extérieur du circuit intégré.

La puce de circuit intégré à protéger contient également un élément 2 de mémorisation non volatile d'une clé KEY destinée à être combinée par une fonction f_{A} (bloc 3) avec l'identifiant ID. La clé KEY est stockée dans le circuit lors d'une phase d'initialisation (première utilisation ou phase de test du circuit). Toutefois, selon l'invention, la clé dépend du ou des paramètres intrinsèques (paramètre A de la fonction f_{A} et/ou identifiant ID) de la puce.

Le résultat R de la fonction de combinaison 3 est comparé (bloc 4, =) par rapport à une grandeur prédéterminée R0, de préférence constante, pour valider ou invalider le démarrage du circuit (signal OK). La valeur R0 que doit respecter le résultat R est ou non la même pour toutes les puces de circuit intégré mais est toujours fixée à la fabrication (de préférence, en logique câblée). C'est notamment pourquoi, la clé KEY doit, selon l'invention, être calculée en fonction de l'identifiant ID de la puce et de la fonction f_{A} de calcul (et le cas échéant de la valeur R0_{A} attendue). Si la valeur R0 est différentiée, elle dépend du paramètre A de la fonction de calcul, et peut donc être notée R0_{A}.

Selon un premier exemple, l'outil de personnalisation contient une table de correspondance entre le paramètre A et le résultat R0_{A} attendu par la puce. Ce résultat est alors comparé au résultat courant pour, par exemple, conditionner l'état d'un drapeau de démarrage.

Selon un deuxième exemple, le résultat R0 est directement un résultat de type drapeau et est le même pour toutes les puces.

De préférence, la fonction f_{A} est une fonction bijective afin de permettre le calcul de la clé KEY depuis l'extérieur du circuit à partir des paramètres ID et A, comme on le verra par la suite. Par exemple, la fonction f_{A} est du type A*ID + KEY (ou A*KEY + ID).

Comme pour l'identifiant ID, le paramètre A conditionnant la fonction f_{A} de calcul peut être fixé par tout moyen habituel de stockage natif dans une puce de circuit intégré.

Selon un exemple particulier de réalisation, on pourra, pour différentier la fonction f_{A} (le paramètre A) et le cas échéant le paramètre ID, mettre en oeuvre une technique de différentiation des masques d'un même réticule. Cette technique consiste à assembler plusieurs variantes du circuit pour constituer le réticule servant à former le jeu de masques. Par exemple, lors de la reproduction de la structure (lay-out) du circuit pour former le jeu de masques de fabrication de plusieurs circuits, on prévoit pour chaque circuit du réticule, une implantation sélective de dopant d'un élément de mémorisation qui est différente des implantations sélectives des dopants des éléments de mémorisation des autres circuits. Une telle technique est décrite dans le brevet américain n° 6 780 716 de la demanderesse. On est alors en mesure d'obtenir des codes binaires qui sont différents d'un circuit à un autre alors même que ces circuits sont tous issus d'une même plaquette.

Selon un autre exemple, on modifie le codage de connexions métal d'un circuit à un autre.

Cette technique de différentiation de circuits intégrés au moyen des masques présente l'avantage de fournir un paramètre unique (ou au moins différentié) pour chaque puce de circuit intégré qui ne soit pas observable notamment de façon optique. Cela sécurise la puce fabriquée et notamment l'utilisation de ce paramètre par la suite.

Un avantage de différencier la fonction de combinaison (plus généralement tout ou partie du ou des paramètres dont dépend la clé) au sein d'un même réticule est que cela protège la fabrication des circuits intégrés en protégeant en quelque sorte les masques. En effet, pour être en mesure de fabriquer des produits opérationnels, un fabriquant non autorisé devra examiner par "reverse engineering" tous les produits obtenus à partir d'un jeu de masques afin de connaître toutes les fonctions différentes utilisées et d'obtenir ainsi un jeu de masques reproductibles. Dans le cas contraire et s'il effectue un examen d'un seul produit, cela ne lui permettra pas de déterminer quelle est la fonction f_{A} du produit concerné qui ne sera pas valable pour les autres produits.

La figure 2 représente, de façon très schématique et sous forme de blocs, les éléments contenus dans un circuit intégré 10 pour la mise en oeuvre de l'invention. En figure 2, seuls les éléments constitutifs du circuit 10 qui servent à l'invention ont été illustrés. Ce circuit comporte donc par ailleurs de nombreux autres circuits ou éléments qui dépendent de son application.

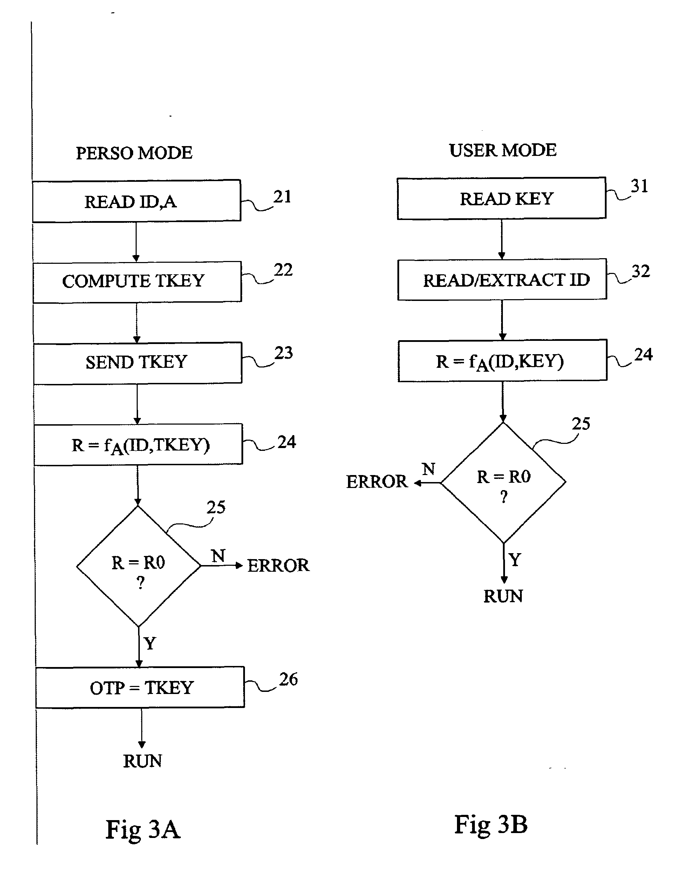

Le circuit 10 comporte une zone 1 de génération, d'extraction ou de mémorisation du numéro d'identification ID. Cette zone 1 représentée de façon très schématique peut correspondre à un registre non volatil contenant le numéro après une extraction initiale, à un circuit d'extraction du numéro à partir du réseau de paramètres physiques, par exemple, à chaque mise sous tension de la puce, etc. Le circuit 10 comporte également un ou plusieurs registres 12 (REG) de stockage temporaire d'une clé TKEY introduite depuis l'extérieur du circuit après son calcul (en pratique depuis un outil de personnalisation PERSO). La sortie du registre 12 est envoyée sur un élément de combinaison logique 15, de type OU-Exclusif (XOR) bit à bit, avec la sortie d'un élément 16 (OTP) destiné à contenir la clé KEY de façon non volatile après que sa validité ait été vérifiée comme on le verra par la suite en relation avec la figure 3A. La sortie de l'élément de combinaison 15 fournit une clé KEY à un bloc 3 (A*ID + KEY) de calcul d'un résultat à partir de la fonction f_{A} (choisie par exemple pour correspondre à une droite).

De préférence, la fonction logique ou arithmétique f_{A} est réalisée en logique câblée lors de la fabrication du circuit. Le but est de bloquer le fonctionnement du circuit en cas de non concordance avec le résultat. Dans l'exemple représenté, le bloc 3 fournit un signal R correspondant au signal de validation OK de la figure 1 pour libérer une entrée de réinitialisation RESET d'une unité centrale 17 que comporte le circuit intégré 10. On considère le cas d'un circuit intégré 10 pourvu de moyens de calcul évolués (unité centrale de traitement) communiquant par l'intermédiaire d'un ou plusieurs bus 18 avec différents périphériques et mémoires parmi lesquelles la mémoire 16 (OTP) et généralement une mémoire 19 (ROM) contenant un programme d'application du circuit intégré. D'autres éléments comme une mémoire volatile (RAM) et des circuits d'entrée-sortie sont également prévus bien que non représentés dans le circuit 10.

En variante, la clé KEY est directement introduite en mémoire non volatile lors de sa génération (la porte 15 est alors omise). Le mode de réalisation de la figure 2 constitue toutefois un mode de réalisation préféré dans la mesure où il permet de vérifier la génération correcte de la clé lors du paramétrage du circuit comme on le verra par la suite en relation avec les figures 3A et 3B.

La figure 3A est un organigramme illustrant l'enregistrement d'une clé KEY dans le circuit de la figure 10. Cet organigramme correspond en pratique à une phase de personnalisation PERSO MODE (par exemple, d'initialisation ou de test), effectuée à l'issue de la fabrication du circuit ou lors de sa première utilisation.

Comme la clé KEY dépend des paramètres intrinsèques de la puce, l'outil de personnalisation doit être capable d'identifier ces paramètres afin de calculer la clé. Par exemple, ces paramètres qui sont en pratique des mots numériques sont fournis par le circuit à personnaliser à l'outil de personnalisation.

Selon un autre exemple dans lequel le concepteur fournit au fabriquant (fondeur) directement le jeu de réticules, la position de la puce de circuit intégrée sur la plaquette (wafer) est identifiable, par exemple, par sa position sur la plaquette. Cette position est détectable par l'outil de personnalisation, la personnalisation (au moins la phase de calcul et d'enregistrement de la clé KEY) étant dans ce cas réalisée par plaquettes entières. L'outil de personnalisation contient par ailleurs une table de correspondance entre la position de la puce et le paramètre de la fonction qui y a été implanté. Il peut alors calculer la clé à stocker dans le circuit intégré. Dans ce cas, le circuit fournit à l'outil de personnalisation uniquement son identifiant ID.

De préférence, la personnalisation n'est pas effectuée par le fabriquant (fondeur) du circuit mais par le concepteur ou par l'assembleur chargé de monter le circuit dans un ensemble (généralement, le client du concepteur). Cette personnalisation est généralement effectuée dans un environnement sécurisé.

Une première étape (bloc 21, READ ID, A) consiste à lire l'identifiant ID de la puce et le paramètre de la fonction A qui est fourni par le circuit 10 à l'outil de personnalisation de façon à lui permettre de calculer la clé KEY. En pratique, l'outil de personnalisation est un système numérique de type ordinateur, pourvu de moyens de calcul et d'interface de connexion au circuit 10, le cas échéant par l'intermédiaire du bus 18.

Le calcul de la clé est effectué par l'outil de personnalisation (bloc 22, COMPUTE TKEY). Pour être en mesure d'effectuer le calcul de la clé, l'outil de personnalisation doit connaître, non seulement le résultat R0 attendu par le circuit, mais également la fonction f (plus précisément son inverse), afin d'être en mesure de retrouver, à partir du paramètre A la fonction f_{A} propre au circuit. Dans l'exemple de la droite (R = A*ID + KEY), l'outil applique en fait la formule TKEY = R-A*ID.

La clé calculée TKEY est ensuite envoyée par l'outil de personnalisation au circuit 10 (bloc 23, SEND TKEY). Cette clé arrive dans le registre 12 (figure 2) et est combinée par les portes XOR 15 avec un mot contenu dans la mémoire 16. Comme il s'agit d'une première initialisation, la mémoire 16 ne contient que des bits à l'état 0 de sorte que la clé KEY fournie par les portes 15 correspond à la clé TKEY introduite de l'extérieur.

Le circuit 10 (bloc 3) combine la clé à l'identifiant et fournit un résultat (bloc 24, R = f_{A}(ID, TKEY)).

Ce résultat est comparé (bloc 25, R = R0 ?) par rapport au résultat attendu R0 correspondant à la constante contenue de façon non volatile dans le circuit 10. Si le résultat est incorrect (sortie N du test 25), le circuit ne démarre pas, ou se met en boucle infinie, ou entame n'importe quel autre traitement d'erreur approprié (ERROR) choisi, par exemple, en fonction de l'application.

En cas de résultat correct (sortie Y du test 25), la valeur de la clé TKEY introduite de l'extérieur est mémorisée dans la mémoire non volatile 16 (bloc 26, OTP = KEY) et le circuit est autorisé à démarrer (RUN).

Pour le cas où la mémoire 16 contient des bits autres que 0 (signifiant soit un défaut de la mémoire, soit une tentative de piratage), la clé KEY initiale est fausse et le circuit ne démarre jamais.

La figure 3B représente un organigramme simplifié du procédé de vérification d'authenticité d'un circuit selon l'invention. Dans le cas où la clé a été introduite conformément au mode de mise en oeuvre de la figure 3A, la figure 3B illustre le cas d'un deuxième démarrage (ou d'un démarrage ultérieur) du circuit, correspondant généralement à une utilisation en mode utilisateur (USER MODE).

Une première étape (bloc 31, READ KEY) consiste à lire la clé de la mémoire 16 du circuit 10. Puis, ou en parallèle, on extrait ou on lit (bloc 32, READ/EXTRACT ID) l'identifiant de la puce. Ces deux opérandes sont combinés par le circuit 3 de façon à calculer un résultat R (bloc 24, R = f_{A}(ID, KEY)). Cette opération est la même que l'opération effectuée en figure 3A pour vérifier la clé calculée TKEY.

Le résultat R est alors comparé à la constante attendue R0 (bloc 25), de façon à autoriser ou non le démarrage du circuit.

Une fois démarré, le circuit met en oeuvre le traitement lié à son application qui ne fait pas l'objet de la présente invention.

Dans un mode de réalisation, le résultat R calculé peut être exploité directement par l'unité centrale 17 pour comparer ce résultat par rapport à un résultat attendu contenu dans la mémoire morte 19. Dans ce cas, la valeur attendue peut être individualisée d'une puce à l'autre ou par groupe de puces lors de la fabrication en fonction des implantations effectuées pour différentier la fonction. Un tel mode de réalisation permet de supprimer la logique câblée pour calculer la fonction et/ou apporte un autre mode de blocage.

Un avantage de la présente invention est qu'elle protège la structure d'un circuit intégré contre des fabrications pirates, et notamment contre l'utilisation d'un jeu de masques valide pour fabriquer des circuits pirates.

Bien entendu, la présente invention est susceptible de diverses variantes et modifications qui apparaîtront à l'homme de l'art. En particulier, différentes fonctions de calcul ou combinaison (par exemple, une fonction de type symétrique habituellement utilisée en cryptographie) pourront être choisies pourvu que, quel que soit le paramètre ou les paramètres de la puce, il existe au moins une clé qui, combinée avec cet identifiant par la fonction, fournisse une constante.

De même, la mise en oeuvre de l'invention et notamment la différentiation des paramètres en utilisant des techniques en elles-mêmes connues (par exemple la technique décrite dans le brevet américain n° 6 780 716) est à la porté de l'homme du métier à partir des indications fonctionnelles données ci-dessus.

En outre, l'invention est compatible avec n'importe quelle utilisation ultérieure de la clé KEY et de l'identifiant ID. En particulier, l'invention est compatible avec d'autres personnalisations ultérieures du circuit intégré (par exemple, par des fournisseurs d'application) consistant à diversifier la clé KEY pour dédier le circuit à certaines applications ou fonctions. La phase de personnalisation prévue par l'invention a pour objectif de protéger la fabrication en interdisant l'utilisation d'un circuit pirate quelle que soit sa destination (l'application à laquelle il est destiné par personnalisation du fournisseur d'application - transport, bancaire, etc.).

## Revendications

1. Procédé de protection d'un circuit intégré (10), conditionnant le démarrage de tout ou partie du circuit au moins à la présence d'une clé (KEY) enregistrée de façon non volatile postérieurement à la fabrication du circuit, ladite clé dépendant d'au moins un premier paramètre (A, ID) présent de façon non volatile dans le circuit à l'issue de sa fabrication, **caractérisé en ce que** : ladite clé est générée à l'extérieur du circuit intégré,
le procédé comporte les étapes :
d'appliquer, à ladite clé et audit premier paramètre, une fonction de calcul (f_{A}) intégrée au circuit (10) et dépendant dudit premier paramètre ; et
de vérifier que le résultat (R) du calcul respecte une valeur prédéterminée (R0) pour autoriser le démarrage du circuit.

2. Procédé selon la revendication 1, dans lequel l'enregistrement de ladite clé (KEY) dans le circuit intégré (10) n'est autorisé par celui-ci que si l'application de ladite fonction (f_{A}) à la clé respecte ladite valeur.

3. Procédé selon la revendication 1 ou 2, dans lequel ladite fonction (f_{A}) a pour opérandes au moins ladite clé (KEY) et ledit premier paramètre constitué d'un numéro d'identification (ID) du circuit (10).

4. Procédé selon l'une quelconque des revendications 1 à 3, dans lequel ladite clé (KEY) est générée, à l'extérieur du circuit, à partir dudit paramètre (ID) et de la fonction (f_{A}) pour respecter ladite valeur.

5. Procédé selon l'une quelconque des revendications 1 à 4, dans lequel la fonction (f_{A}) tient compte d'un deuxième paramètre (A) présent de façon non volatile dans le circuit (10) à l'issue de sa fabrication.

6. Procédé selon la revendication 5, dans lequel ledit deuxième paramètre (A) dépend de la position de la puce contenant le circuit intégré (10) dans une plaquette portant plusieurs puces.

7. Procédé selon l'une quelconque des revendications 1 à 6, dans lequel ledit paramètre (A, ID) diffère d'une puce de circuit intégré à une autre ou d'un groupe de puces à un autre.

8. Circuit intégré (10) comprenant un élément (2, 16) de mémorisation d'une clé (KEY) de façon non volatile et un élément (1) de mémorisation ou d'extraction d'au moins un paramètre du circuit (A, ID) présent de façon non volatile dans le circuit à l'issue de sa fabrication et des moyens pour conditionner le démarrage de tout ou partie du circuit au moins à la présence de la clé dans le circuit, **caractérisé en ce que** :
ladite clé dépend dudit paramètre et est générée à l'extérieur du circuit ; et
ledit circuit comporte des moyens pour :
appliquer, à ladite clé et audit premier paramètre, une fonction de calcul (f_{A}) intégrée au circuit (10) et dépendant dudit premier paramètre ; et
vérifier que le résultat (R) du calcul respecte une valeur prédéterminée (R0) pour autoriser le démarrage du circuit.

9. Procédé de personnalisation d'un circuit intégré (10) conforme à la revendication 8, comprenant une fonction de calcul (f_{A}), au moins un premier paramètre (A, ID) présent de façon non volatile dans le circuit à l'issue de sa fabrication et un élément (3) de calcul de la fonction (f_{A}) et de vérification du résultat par rapport à une valeur prédéterminée, comprenant les étapes suivantes :
calculer (22), à l'extérieur du circuit et à partir dudit paramètre et de la fonction, une clé (TKEY) telle que l'application de la fonction à la clé fournisse un résultat respectant une propriété prédéterminée ;
transférer (23) la clé calculée au circuit ;
appliquer (24), dans le circuit, ladite fonction de calcul à la clé calculée ; et
autoriser (25) l'enregistrement (26) de la clé dans le circuit intégré de façon non volatile uniquement si le résultat respecte ladite propriété.

10. Procédé de fabrication de puces de circuit intégré, **caractérisé en ce qu'**il comporte l'étape de faire varier au sein d'un même jeu de masques définissant plusieurs circuits, une fonction de calcul (f_{A}) dépendant d'un paramètre pour la mise en oeuvre du procédé de protection selon la revendication 7.

## Claims

1. A method for protecting an integrated circuit (10), conditioning the starting of all or part of the circuit at least to the presence of a key (KEY), recorded in non-volatile fashion subsequently to the manufacturing of the circuit, said key depending on at least one first parameter (A, ID) present in non-volatile fashion in the circuit at the end of its manufacturing, **characterized in that** said key is generated outside of the integrated circuit,
the method comprises the steps of:
applying, to said key and to said first parameter, a calculation function (f_{A}) integrated to the circuit (10) and dependent upon said first parameter; and
checking whether the result (R) of the calculation complies with a predetermined value (R0), for authorizing the starting of the circuit.

2. The method of claim 1, wherein the recording of said key (KEY) in the integrated circuit (10) is only allowed by said circuit if the application of said function (f_{A}) to the key complies with said value.

3. The method of claim 1 or 2, wherein said function (f_{A}) has as operands at least said key (KEY) and said first parameter formed of an identification number (ID) of the circuit (10).

4. The method of any of claims 1 to 3, wherein said key (KEY) is generated, outside of the circuit, based on said parameter (ID) and the function (f_{A}) to comply with said value.

5. The method of any of claims 1 to 4, wherein the function (f_{A}) takes into account a second parameter (A) present in non-volatile fashion in the circuit (10) at the end of its manufacturing.

6. The method of claim 5, wherein said second parameter (A) depends on the position of the chip containing the integrated circuit (10) in a wafer supporting several chips.

7. The method of any of claims 1 to 6, wherein said parameter (A, ID) differs from one integrated circuit chip to another or from one group of chips to another.

8. An integrated circuit (10) comprising an element (2, 16) for storing a key (KEY) in non-volatile fashion and an element (1) for storing or extracting at least one parameter from the circuit (A, ID) present in a non-volatile fashion in the circuit at the end of its manufacturing, and means for conditioning the starting of all or part of the circuit at least to the presence of the key in the circuit, **characterized in that**:
said key depends on said parameter and is generated outside of the circuit; and
said circuit comprises means for:
applying, to said key and to said first parameter, a calculation function (f_{A}) integrated to the circuit (10) and dependent upon said first parameter; and
checking whether the result (R) of the calculation complies with a predetermined value (R0), for authorizing the starting of the circuit.

9. A method for personalizing an integrated circuit (10) according to claim 8 comprising a calculation function (f_{A}), at least one first parameter (A, ID) present in non-volatile fashion in the circuit at the end of its manufacturing and an element (3) for calculating the function (f_{A}) and for checking the result with respect to a predetermined value, comprising the steps of:
calculating (22), outside of the circuit and based on said parameter and on the function, a key (TKEY) such that the application of the function to the key provides a result complying with a predetermined property;
transferring (23) the calculated key to the circuit;
applying (24), in the circuit, said calculation function to the calculated key; and
allowing (25) the recording (26) of the key in the integrated circuit in non-volatile fashion only if the result complies with said property.

10. A method for manufacturing integrated circuit chips, **characterized in that** it comprises the step of varying, within a same set of masks defining several circuits, a calculation function (f_{A}) depending on a parameter for the implementation of the protection method of claim 7.

## Patentansprüche

1. Ein Verfahren zum Schutz einer integrierten Schaltung (10), Konditionieren des Startens der ganzen oder eines Teils der Schaltung mindestens bei Vorhandensein eines Schlüssels (KEY), aufgezeichnet in nicht-flüchtiger Art darauffolgend auf die Herstellung der Schaltung, wobei der Schlüssel abhängig ist von mindestens einem ersten Parameter (A, ID), der in nicht-flüchtiger Art in der Schaltung am Ende deren Herstellung vorhanden ist, **dadurch gekennzeichnet, dass** der Schlüssel außerhalb der integrierten Schaltung erzeugt wird, wobei das Verfahren die folgenden Schritte aufweist:
Anwenden auf den Schlüssel und den erwähnten ersten Parameter einer Berechnungsfunktion (f_{A}) integriert mit der Schaltung (10) und abhängig von dem erwähnten ersten Parameter; und
Überprüfen, ob das Ergebnis (R) der Berechnung mit einem vorbestimmten Wert (R0) zur Autorisierung des Startens der Schaltung zusammenpasst.

2. Verfahren nach Anspruch 1, wobei die Aufzeichnung des Schlüssels (KEY) in der integrierten Schaltung (10) nur durch die erwähnte Schaltung gestattet wird, wenn das Anlegen der erwähnten Funktion (f_{A}) an den Schlüssel mit einen erwähnten Wert zusammenpasst.

3. Verfahren nach Anspruch 1 oder 2, wobei die Funktion (f_{A}) als Operanden mindestens den erwähnten Schlüssel (KEY) und den erwähnten ersten Parameter, gebildet durch eine Identifikationsnummer (ID) der Schaltung (10) besitzt.

4. Verfahren nach einem der Ansprüche 1 bis 3, wobei der Schlüssel (KEY) außerhalb der Schaltung erzeugt wird, und zwar basierend auf dem erwähnten Parameter (ID) und der Funktion (f_{A}) um dem erwähnten Wert zu entsprechen.

5. Verfahren nach einem der Ansprüche 1 bis 4, wobei die Funktion (f_{A}) einen zweiten Parameter (A) berücksichtigt, der in einer nicht-flüchtigen Art und Weise in der Schaltung (10) am Ende ihrer Herstellung vorhanden ist.

6. Verfahren nach Anspruch 5, wobei der zweite Parameter (A) von der Position des, die integrierte Schaltung (10) enthaltenen Chips abhängt und zwar in einem mehrere Chips tragenden Wafer.

7. Verfahren nach einem der Ansprüche 1 bis 6, wobei der erwähnte Parameter (A, ID) sich von einem integrierten Schaltungschip zu einem weiteren oder von einer Gruppe von Chips zu einer anderen unterscheidet.

8. Integrierte Schaltung (10), die ein Element (2, 16) aufweist zum Speichern eines Schlüssels (KEY) in einer nicht-flüchtigen Art und Weise und mit einem Element (1) zum Speichern oder Herausziehen von mindestens einem Parameter aus der Schaltung (A, ID) und zwar vorhanden in einer nicht-flüchtigen Art und Weise in dieser Schaltung am Ende von deren Herstellung und Mittel zur Konditionierung des Startens der ganzen oder eines Teils der Schaltung mindestens bis zum Vorhandensein eines Schlüssels in der Schaltung, **dadurch gekennzeichnet, dass**:
der Schlüssel, der von dem erwähnten Parameter abhängt und außerhalb der Schaltung erzeugt wird; und
die erwähnte Schaltung Mittel aufweist, um:
auf den erwähnten Schlüssel und den erwähnten ersten Parameter eine Berechnungsfunktion (f_{A}) anzuwenden, die in der Schaltung (10) integriert ist, und zwar abhängig von dem ersten Parameter; und
Überprüfen ob das Resultat (R) der Berechnung mit einem vorbestimmten Wert (R0) übereinstimmt bzw. entspricht und zwar zur Autorisierung des Startens der Schaltung.

9. Verfahren zur Personalisierung einer integrierten Schaltung (10) gemäß Anspruch 8, wobei eine Berechnungsfunktion (f_{A}) vorgesehen ist, mit mindestens einem Parameter (A, ID) vorhanden in nicht-flüchtiger Art und Weise in der Schaltung am Ende von deren Herstellung und ferner mit einem Element (3) zur Berechnung der Funktion (f_{A}) und zum Überprüfen des Resultats bezüglich eines vorbestimmten Werts, wobei die folgenden Schritte vorgesehen sind:
Berechnen (22), außerhalb der Schaltung und basierend auf dem erwähnten Parameter und auf der erwähnten Funktion, einen Schlüssel (TKEY) derart, dass die Anwendung der Funktion auf den Schlüssel ein Resultat liefert und zwar übereinstimmend mit einer vorbestimmten Eigenschaft;
Übertragen (23) des berechneten Schlüssels an die Schaltung;
Anlegen oder Anwenden (24), in der Schaltung, der erwähnten Berechnungsfunktion auf den berechneten Schlüssel, und
Gestatten (25) des Aufzeichnens (26) des Schlüssels in der integrierten Schaltung in einer nicht-flüchtigen Art und Weise, nur dann, wenn das Resultat mit der erwähnten Eigenschaft übereinstimmt oder dieser entspricht.

10. Verfahren zur Herstellung integrierter Schaltungschips, **dadurch gekennzeichnet, dass** dies den Schritt des Variierens aufweist, und zwar innerhalb eines selben Satzes von Masken, die mehrere Schaltungen definieren, einer Rechnungsfunktion (f_{A}) abhängig von einem Parameter für die Implementierung des Schutzverfahrens nach Anspruch 7.
